# EUROPEAN PATENT APPLICATION

(11) **EP 4 827 110 A1**
(43) Date of publication of application: **21.10.2026**
(21) Application number: 24925493.9
(22) Date of filing: 18.09.2024
(51) Int. Cl.: H04Q 11/00

(54) **OPTICAL GATEWAY**

(30) Priority: 25.02.2024 CN 202420344584 U
(71) Applicant: Huawei Technologies Co., Ltd., Shenzhen, Guangdong 518129 (CN)
(72) Inventor: LI, Yao, Shenzhen, Guangdong 518129 (CN)
(74) Representative: Goddar, Heinz J.
(86) International application number: PCT/CN2024/119281
(87) International publication number: WO 2025/175753

(57) **Abstract**

Embodiments of this application disclose an optical gateway. A space enclosed by a front housing and a rear housing of the optical gateway is used to accommodate a circuit board, a screen, an optical fiber interface component, and an optical transceiver module. The optical transceiver module is electrically connected to the circuit board. The optical fiber interface component is configured to connect to an optical fiber. The screen is fastened to the front housing. The screen is electrically connected to the circuit board. In addition, the front housing includes a light-transmitting area, and an image on the screen may be displayed through the light-transmitting area. In other words, in addition to implementing a conventional optical signal transmission function by using the optical transceiver module and the optical fiber interface component, the optical gateway may further display, through the screen, information that a user desires to learn of. For example, time, weather, images, upload and download speeds, and the like are displayed on the screen to implement interaction between the user and the optical gateway, thereby facilitating improvement of user experience.

## Description

This application claims priority to Chinese Patent Application No. 202420344584.3, filed with the China National Intellectual Property Administration on February 25, 2024 and entitled "OPTICAL GATEWAY", which is incorporated herein by reference in its entirety.

### TECHNICAL FIELD

This application relates to the communications field, and in particular, to an optical gateway.

### BACKGROUND

Fiber to the room (fiber to the room, FTTR) is a networking technology of laying optical fibers to each room to achieve comprehensive network coverage. FTTR can provide network coverage without dead zones and achieve a gigabit network transmission rate, thereby easily satisfying network requirements of people in daily life and office work.

FTTR includes a plurality of optical gateways. Generally, whole-house networking is implemented by using one primary gateway and a plurality of secondary gateways. The primary gateway and the secondary gateways may be placed at different locations in a home, for example, a media box, a TV cabinet, mounted on a wall, or embedded in a switch box. Currently, the optical gateway mainly implements a conventional optical signal transmission function, and lacks a function of interacting with users.

### SUMMARY

Embodiments of this application provide an optical gateway. The gateway may display, through a screen, information that a user desires to learn of. For example, time, weather, images, upload and download speeds, and the like are displayed on the screen to implement interaction between the user and the optical gateway, thereby facilitating improvement of user experience.

According to a first aspect, an embodiment of this application provides an optical gateway. The optical gateway includes a front housing, a rear housing, a screen, a circuit board, an optical fiber interface component, and an optical transceiver module. The front housing is fastened to the rear housing. A space enclosed by the front housing and the rear housing is used to accommodate the screen, the circuit board, the optical fiber interface component, and the optical transceiver module. The optical transceiver module is electrically connected to the circuit board. The optical fiber interface component is configured to connect to an optical fiber. The screen is fastened to the front housing. The screen is electrically connected to the circuit board. The front housing includes a light-transmitting area, and an image on the screen is displayed through the light-transmitting area.

In this implementation, in addition to implementing a conventional optical signal transmission function by using the optical transceiver module and the optical fiber interface component, the optical gateway may further display, through the screen, information that the user desires to learn of. For example, time, weather, images, upload and download speeds, and the like are displayed on the screen to implement interaction between the user and the optical gateway, thereby facilitating improvement of user experience.

In some possible implementations, the optical gateway further includes a screen protective sheet, and the screen protective sheet is fastened to the light-transmitting area of the front housing. The screen protective sheet protects the screen. It should be understood that, to better protect the screen, a size of the screen protective sheet should not be less than a size of the screen, so that the screen protective sheet fully covers the screen.

In some possible implementations, the screen protective sheet and the front housing are integrally formed. For example, the integrally forming is specifically implemented in a two-color injection molding manner, to facilitate improvement of stability and aesthetics of an integral structure.

In some possible implementations, the optical gateway further includes a transparent film, and the transparent film is fastened on a front face of the front housing. Disposing the transparent film facilitates improvement of surface flatness.

In some possible implementations, on the transparent film, a remaining part other than a part covering the light-transmitting area includes a pattern, to facilitate improvement of aesthetics of the optical gateway.

In some possible implementations, the screen is a touchscreen, and is configured to control the screen in a touch manner, so that interaction between the user and the optical gateway is more convenient.

In some possible implementations, a side face of the front housing is further provided with a button, and the button is electrically connected to the circuit board. In other words, the user can control the screen by using the button, for example, control the screen to turn pages to display different images, thereby enriching manners of interaction between the user and the optical gateway.

In some possible implementations, the screen includes a first screw hole. A rear face of the front housing includes a second screw hole. The first screw hole and the second screw hole are configured for fixed connection using a screw, to fasten the screen to the front housing. An implementation is relatively simple, and assembly is convenient.

In some possible implementations, the optical gateway further includes a screen pressure plate. The screen pressure plate is placed on a rear face of the screen. The rear face of the front housing includes a second screw hole. The screen pressure plate includes a third screw hole. The second screw hole and the third screw hole are configured for fixed connection using a screw, to fasten the screen to the front housing, thereby extending a specific implementation of fastening the screen.

In some possible implementations, the rear face of the front housing includes at least one limiting structure, and the screen is fastened to an area surrounded by the at least one limiting structure. By disposing the limiting structure, the screen can be quickly aligned to a fixed position during installation, and the screen can be prevented from shaking up, down, left, and right after installation due to an external reason.

In some possible implementations, the circuit board includes a first USB interface, and the rear housing includes a cutout area. The first USB interface is configured to connect to a data cable or an external device through a cutout area, thereby enriching use scenarios of the optical gateway.

In some possible implementations, the first USB interface is a Type-C interface, to facilitate connection to an external device that also uses a Type-C interface.

In some possible implementations, the optical gateway further includes an external storage module. The external storage module is fastened to the rear housing. The external storage module includes a second USB interface. In other words, the external storage module and the rear housing are fastened to a detachable manner, to help provide a larger storage space for the optical gateway according to an actual requirement.

In some possible implementations, the second USB interface is a Type-C interface, to facilitate connection to the Type-C first USB interface.

In some possible implementations, the optical gateway further includes a decorative cover. The decorative cover is configured to cover the rear housing and is fastened to the rear housing, to cover a relatively disordered area on the rear housing, so that a rear structure of the optical gateway is flatter and more aesthetic.

In some possible implementations, the decorative cover includes a knockout hole structure. Although the knockout hole structure is fastened on the decorative cover, the user can manually remove the knockout hole structure according to a requirement of the user, so that the user selects to install an optical splitter on the optical gateway according to a preference of the user. In this way, the optical splitter can be placed together with a primary gateway, and an appropriate installation position does not need to be separately selected for the optical splitter. This is conducive to saving space and making the whole more concise and aesthetic.

In some possible implementations, a target area on the rear housing is configured to detachably connect to the optical splitter, and the knockout hole structure is configured to cover the target area. In other words, the target area is further reserved on the rear housing, and the user chooses to fasten the optical splitter in the target area by using a fastener on the rear housing according to a preference of the user, thereby achieving appropriate utilization of space and providing a personalized selection for the user.

In some possible implementations, the decorative cover further includes a heat dissipation hole, to facilitate improvement of heat dissipation performance of the optical gateway.

In some possible implementations, the optical gateway is a primary gateway or a secondary gateway used in a fiber-to-the-room (fiber-to-the-room, FTTR) scenario, or an optical network unit (optical network unit, ONU) used in a fiber-to-the-home (fiber-to-the-home, FTTH) scenario.

In embodiments of this application, a space enclosed by the front housing and the rear housing of the optical gateway is used to accommodate the circuit board, the screen, the optical fiber interface component, and the optical transceiver module. The optical transceiver module is electrically connected to the circuit board. The optical fiber interface component is configured to connect to an optical fiber. The screen is fastened to the front housing. The screen is electrically connected to the circuit board. In addition, the front housing includes the light-transmitting area, and an image on the screen may be displayed through the light-transmitting area. In other words, in addition to implementing a conventional optical signal transmission function by using the optical transceiver module and the optical fiber interface component, the optical gateway may further display, through the screen, information that the user desires to learn of. For example, time, weather, images, upload and download speeds, and the like are displayed on the screen to implement interaction between the user and the optical gateway, thereby facilitating improvement of user experience.

### BRIEF DESCRIPTION OF DRAWINGS

FIG. 1 is a diagram of an FTTH system architecture;
FIG. 2 is a diagram of an FTTR system architecture;
FIG. 3 is a schematic perspective view of a rear side of a front housing of an optical gateway according to an embodiment of this application;
FIG. 4 is a schematic perspective view of a front side of a front housing of an optical gateway according to an embodiment of this application;
FIG. 5 is another schematic perspective view of the front side of the front housing of the optical gateway according to an embodiment of this application;
FIG. 6 is another schematic perspective view of the rear side of the front housing of the optical gateway according to an embodiment of this application;
FIG. 7 is a schematic perspective view of a rear housing of an optical gateway according to an embodiment of this application;
FIG. 8 is a diagram of a structure of a decorative cover of an optical gateway according to an embodiment of this application; and
FIG. 9 is another diagram of a structure of a decorative cover of an optical gateway according to an embodiment of this application.

### DESCRIPTION OF EMBODIMENTS

Embodiments of this application provide an optical gateway. The gateway may display, through a screen, information that a user desires to learn of. For example, time, weather, images, upload and download speeds, and the like are displayed on the screen to implement interaction between the user and the optical gateway, thereby facilitating improvement of user experience.

It should be noted that in the specification, claims, and the foregoing accompanying drawings of this application, the terms "first", "second", and the like are intended to distinguish between similar objects but do not limit a specific order or sequence. It should be understood that the foregoing terms are interchangeable in proper cases, so that embodiments described in this application can be implemented in a sequence other than the content described in this application. In addition, the terms "include", "have", and any other variant thereof are intended to cover a non-exclusive inclusion. For example, a process, method, system, product, or device that includes a list of steps or units is not necessarily limited to those expressly enumerated steps or units, but may include other steps or units not expressly enumerated or inherent to such a process, method, product, or device.

For ease of describing a relationship between one element and another element shown in the figure in this specification, spatial relationship terms may be used herein, for example, "under", "below", "down", "above", and "up". It should be understood that the spatial relationship terms are intended to include different orientations of devices in application or operations other than the directions described in the accompanying drawings. For example, if a device in the accompanying drawings is flipped, an element described as "below another element or feature" or "below another element or feature" is oriented to "above another element or feature". In this case, the term such as "below" may include two orientations: above and below. The device may be alternatively oriented (rotated by 90 degrees or in another direction), and a spatial descriptor herein is understood accordingly.

It should be understood that embodiments of this application may be specifically applied to different optical access scenarios, including but not limited to, a fiber-to-the-home (fiber-to-the-home, FTTH) scenario, for example, an optical network unit (optical network unit, ONU), or a fiber-to-the-room (fiber-to-the-room, FTTR) scenario, for example, an optical gateway in whole-house networking. The optical gateway may be configured to connect to an optical fiber. The optical gateway may be specifically a primary gateway or a secondary gateway. The following first describes an FTTR scenario and an FTTR-related FTTH scenario.

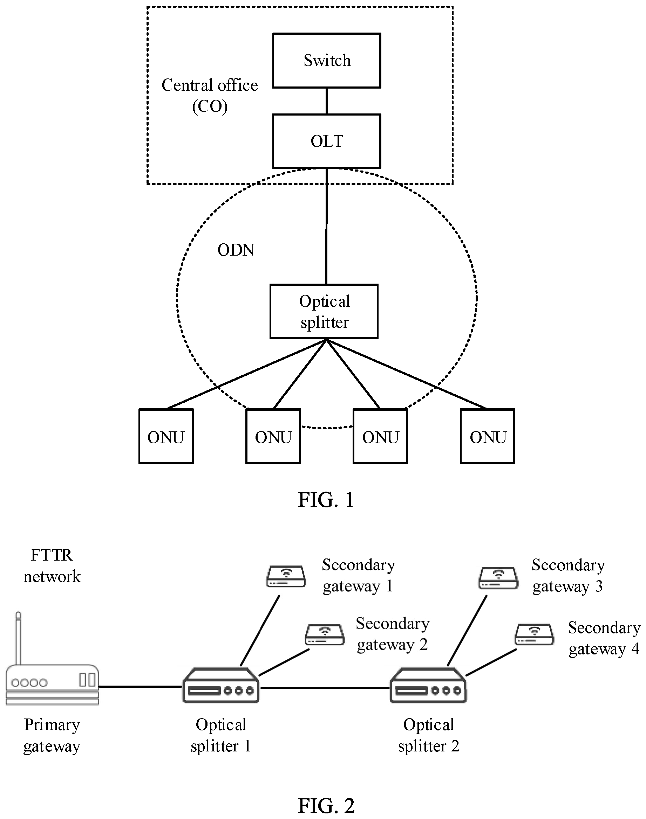

FIG. 1 is a diagram of an FTTH system architecture. An optical line terminal (optical line terminal, OLT) is connected to an upper-layer network-side device (such as a switch or a router), and is connected to one or more lower-layer optical distribution networks (optical distribution networks, ODNs). The ODN includes a passive optical splitter used for optical power distribution, a backbone optical fiber connected between the passive optical splitter and the OLT, and a branch optical fiber connected between the passive optical splitter and an ONU. During downlink data transmission, the ODN transmits downlink data of the OLT to each ONU by using the optical splitter, and the ONU selectively receives downlink data carrying an identifier of the ONU. During uplink data transmission, the ODN combines optical signals sent by N ONUs into one optical signal, and transmits the optical signal to the OLT. The ONU provides a user-side interface for a terminal to access, and is connected to the ODN.

On the basis of FTTH, to resolve a Wi-Fi coverage problem of a home network, optical fibers can be further extended to residential rooms, and the ONUs can be installed in the rooms. This application scenario is referred to as FTTR.

FIG. 2 is a diagram of an FTTR system architecture. An FTTR network and an FTTH network may be considered as two levels of PON systems. In a first-level PON system (FTTH), an OLT is deployed in a central office, and an ONU is deployed in an information box in a home. In a second-level PON system (FTTR), a primary gateway may be deployed in the information box of the home in place of the ONU in FTTH. The primary gateway in an FTTR scenario has a function similar to that of the OLT in an FTTH scenario, and the primary gateway may also have a function similar to that of the ONU in the FTTH scenario. In other words, the primary gateway in FTTR is a device that has functions of both the OLT and the ONU, and may be used as a network device that serves as a connecting link between FTTH and FTTR. A secondary gateway in FTTR may be deployed in each room in the home, and is configured to connect to a terminal. The secondary gateway and the ONU in FTTH are essentially network devices of a same type. A difference lies in that the ONU in FTTH is generally deployed in the information box, and there is usually one access point (access point, AP) between the ONU and the terminal. However, in FTTR, the secondary gateway enters each room, and the secondary gateway further has a function of the AP and may directly establish a Wi-Fi connection to the terminal.

It should be understood that a plurality of secondary gateways may be deployed in FTTR, and each secondary gateway is connected to a branch port of a corresponding optical splitter. In addition, a quantity of optical splitters in FTTR is not limited in this application, and the primary gateway is connected to the optical splitters in a cascading manner. The primary gateway may manage and configure all secondary gateways in a unified manner. For example, as a control center of a home network, the primary gateway may configure all Wi-Fi hotspots in the home as a unified network, optimize a channel to avoid interference, and control roaming and handover of the terminal, to reduce network handover time, thereby improving user experience.

The following describes in detail an optical gateway provided in embodiments of this application. Specifically, a structure of the optical gateway mainly includes a front housing, a rear housing, a screen, a circuit board, an optical fiber interface component, and an optical transceiver module. The front housing and the rear housing are fastened in a detachable manner. The screen, the circuit board, the optical fiber interface component, and the optical transceiver module are accommodated in a space enclosed by the front housing and the rear housing. The optical transceiver module is electrically connected to the circuit board, and the optical fiber interface component is configured to connect to an optical fiber, so that optical signal transmission can be implemented between the optical transceiver module and another device through the optical fiber connected to the optical fiber interface component. Specifically, the optical transceiver module may convert an electrical signal from the circuit board into an optical signal, and send the optical signal to the optical fiber through the optical fiber interface component; or the optical transceiver module receives an optical signal from the optical fiber through the optical fiber interface component, converts the optical signal into an electrical signal, and sends the electrical signal to the circuit board. The optical fiber interface component may be inserted into the optical transceiver module, or the optical fiber interface component may be connected to the optical transceiver module in another manner such as an optical fiber. It should be understood that the optical gateway provided in embodiments of this application maintains a conventional function of optical signal transmission. Therefore, the following and the accompanying drawings do not focus on further description and presentation of structures and functions of the circuit board, the optical fiber interface component, and the optical transceiver module, but mainly describe related features of the front housing, the rear housing, and the screen.

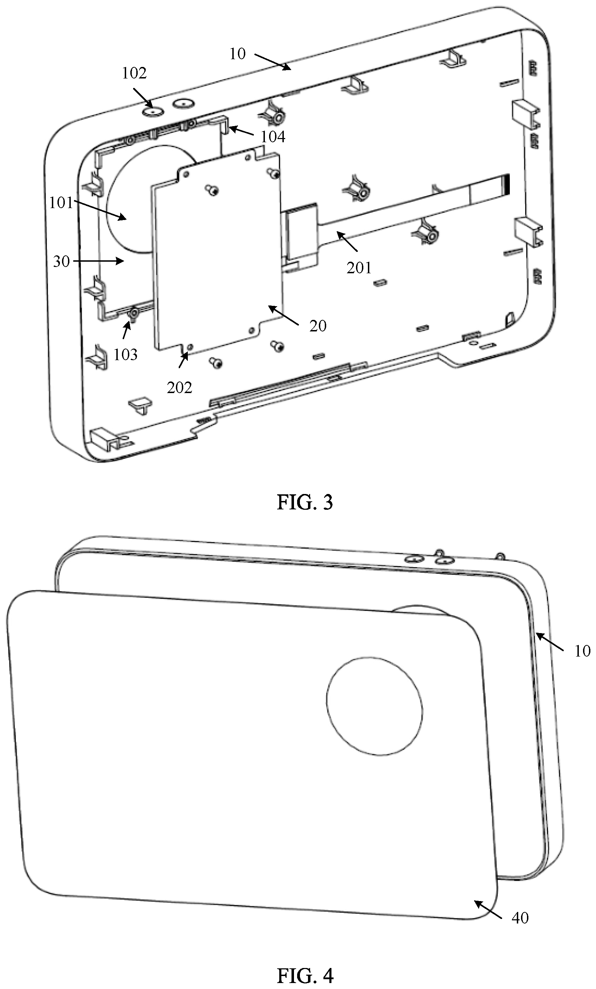

FIG. 3 is a schematic perspective view of a rear side of a front housing of an optical gateway according to an embodiment of this application. As shown in FIG. 3, a screen 20 is fastened on a rear face of a front housing 10, and the screen 20 is electrically connected to a circuit board through a flat cable 201. To ensure that a user can see, through a front face of the front housing 10, an image displayed on the screen 20, a light-transmitting area 101 is disposed on the front housing 10, and the image on the screen 20 can be presented to the user through the light-transmitting area 101. It should be understood that a size, a shape, and a fastening position of the screen 20 are not limited in this embodiment of this application, and a size, a shape, and a fastening position of the light-transmitting area 101 are not limited either. In an example, both the screen 20 and the light-transmitting area 101 are rectangular in shape and have equal sizes, and positions of the screen 20 and the light-transmitting area 101 are also fully aligned. In another example, the screen 20 is rectangular in shape, the light-transmitting area 101 is circular in shape, and a size of the light-transmitting area 101 is less than a size of the screen 20. It should be further understood that an image that can be displayed on the screen 20 is not limited in this embodiment of this application. For example, the screen 20 may display time, weather, images, and upload and download speeds.

In some possible implementations, as shown in FIG. 3, the optical gateway further includes a screen protective sheet 30, and the screen protective sheet 30 is configured to fasten to the light-transmitting area 101 of the front housing 10, to protect the screen. Optionally, the front housing 10 and the screen protective sheet 30 may be integrally formed in a two-color injection molding manner, to facilitate improvement of stability and aesthetics of an integral structure. It should be understood that, to better protect the screen, a size of the screen protective sheet 30 should not be less than a size of the screen 20, so that the screen protective sheet 30 fully covers the screen 20. In an example, both the screen protective sheet 30 and the screen 20 are rectangular in shape and have equal sizes, and positions of the screen protective sheet 30 and the screen 20 are also fully aligned. On the screen protective sheet 30, a circular area shown in FIG. 3 is made of a light-transmitting material, and another area is made of a non-light-transmitting material, so that an image displayed on the screen 20 is displayed in the circular area shown in FIG. 3.

FIG. 4 is a schematic perspective view of a front side of a front housing of an optical gateway according to an embodiment of this application. In some possible implementations, as shown in FIG. 4, the optical gateway further includes a transparent film 40. The transparent film 40 is fastened to the front face of the front housing 10, for example, may be fastened in a bonding manner. Disposing the transparent film 40 facilitates improvement of surface flatness.

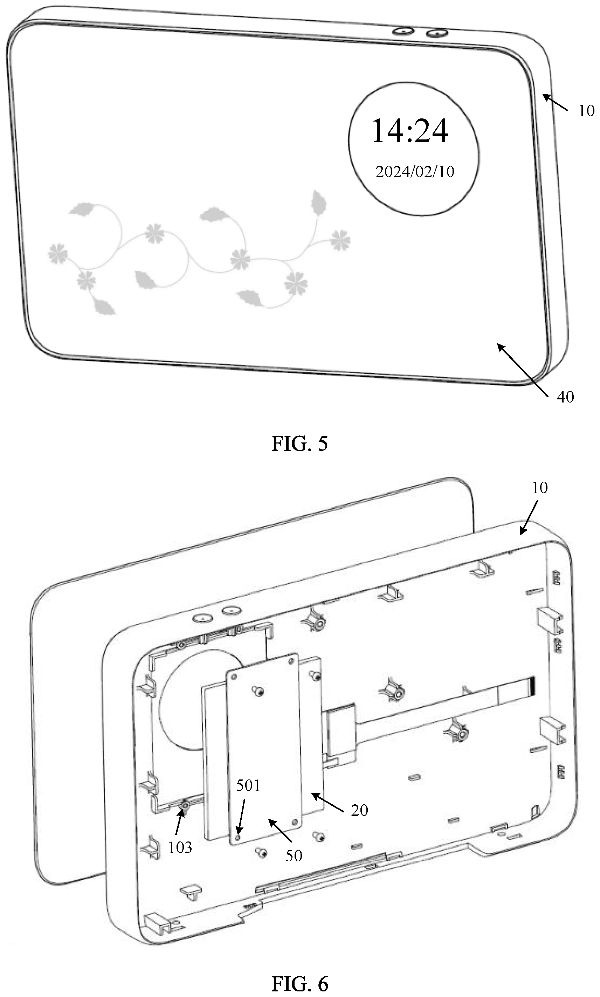

FIG. 5 is another schematic perspective view of the front side of the front housing of the optical gateway according to an embodiment of this application. In some possible implementations, on the transparent film 40, a remaining part other than a part covering the light-transmitting area 101 may be further provided with a pattern, to facilitate improvement of aesthetics of the optical gateway. For example, as shown in FIG. 5, time information on a screen is displayed in a circular area, and a lace pattern is provided in an area other than the circular area on the transparent film 40.

It should be noted that a specific type of the screen 20 is not limited in this application. In an example, the screen 20 may be a common display, a button 102 is disposed on a side face of the front housing 10, and the button 102 is electrically connected to the circuit board. A quantity of buttons 102 is not limited in this application. A user may control the screen 20 by using the button 102, for example, control the screen 20 to turn pages to display different images. In another example, alternatively, the screen 20 may be a touchscreen, and is configured to control the screen 20 in a touch manner. Optionally, if the touchscreen is used, the screen protective sheet 30 and the transparent film 40 may not be disposed, or the screen protective sheet 30 and the transparent film 40 that support a touch function are used.

In a possible scenario, as shown in FIG. 3, the screen 20 includes a mounting ear, a first screw hole 202 is provided on the mounting ear, and a second screw hole 103 is provided on a rear face of the front housing 10. The first screw hole 202 and the second screw hole 103 are configured for fixed connection using a screw, to fasten the screen 20. During assembly, the first screw hole 202 may be aligned with the second screw hole 103, and the screw is inserted into the first screw hole 202 and the second screw hole 103 to fasten the screen 20 to the front housing 10. It should be understood that a specific quantity of first screw holes 202 and a specific quantity of second screw holes 103 are not limited in this application. For example, as shown in FIG. 3, the screen 20 includes an upper mounting ear and lower mounting ear, that is, two mounting ears. Each of the two mounting ears includes two first screw holes. In other words, the screen 20 includes four first screw holes in total, and four second screw holes are also included at corresponding positions on the rear face of the front housing 10.

FIG. 6 is another schematic perspective view of the rear side of the front housing of the optical gateway according to an embodiment of this application. In another possible scenario, as shown in FIG. 6, the optical gateway includes a screen pressure plate 50, and the screen pressure plate 50 is disposed on a rear face of the screen 20. The screen pressure plate 50 includes a third screw hole 501, and the second screw hole 103 is provided on the rear face of the front housing 10. The third screw hole 501 and the second screw hole 103 are configured for fixed connection using a screw, to fasten the screen 20. During assembly, the third screw hole 501 may be aligned with the second screw hole 103, and the screw is inserted into the third screw hole 501 and the second screw hole 103 to fasten the screen 20 to the front housing 10. It should be understood that a specific quantity of second screw holes 103 and a specific quantity of third screw holes 501 are not limited in this application. For example, as shown in FIG. 6, both the quantity of second screw holes 103 and the quantity of third screw holes 501 are 4.

Optionally, as shown in FIG. 3, the rear face of the front housing 10 further includes at least one limiting structure 104, and the screen 20 is fastened to an area surrounded by the limiting structure 104. By disposing the limiting structure 104, the screen 20 can be quickly aligned to a fixed position during installation, and the screen 20 can be prevented from shaking up, down, left, and right after installation due to an external reason. It should be understood that a specific design manner of the limiting structure 104 and a quantity of limiting structures 104 are not limited in this embodiment of this application. For example, as shown in FIG. 3, four limiting structures are respectively disposed at positions, on the rear face of the front housing 10, corresponding to four corners of the rectangular screen 20. For another example, a rectangular limiting structure is disposed on the rear face of the front housing 10, so that the rectangular screen 20 can be exactly fastened to the rectangular limiting structure.

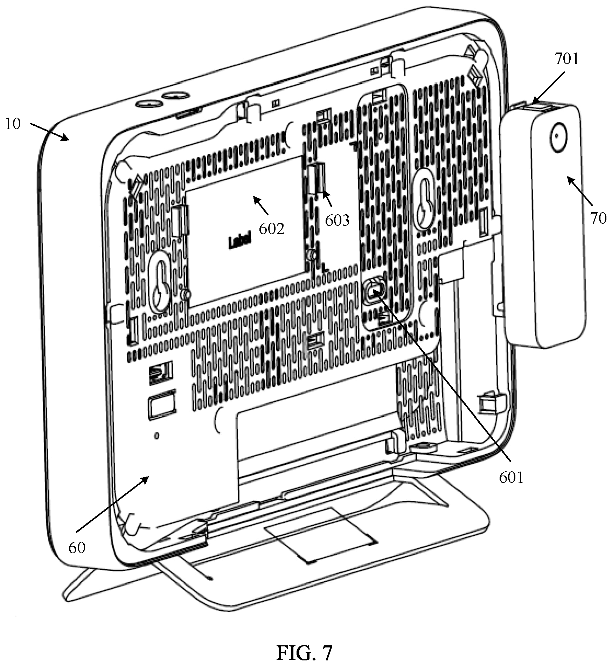

FIG. 7 is a schematic perspective view of a rear housing of an optical gateway according to an embodiment of this application. In some possible implementations, as shown in FIG. 7, the rear housing 60 includes a cutout area 601, and a position of a first USB interface on the circuit board is aligned with the position of the cutout area 601 on the rear housing 60, so that the first USB interface can be connected to a data cable, an external device, or the like through the cutout area 601. This enriches use scenarios of the optical gateway. In an example, the first USB interface may be specifically a Type-C interface, to facilitate connection to a data cable or an external device that uses a Type-C interface. It should be understood that a quantity of cutout areas 601 and a fixed position of the cutout area 601 are not limited in this embodiment of this application, and specifically depend on a quantity of first USB interfaces and a fixed position of the first USB interface on the circuit board.

Optionally, the rear housing 60 of the optical gateway may further be detachably connected to an external storage module 70, to provide a larger storage space for the optical gateway according to an actual requirement. For example, the external storage module 70 is fastened to the rear housing 60 by using a fastener 701, and the external storage module 70 may be specifically a solid-state disk (solid-state disk, SSD). The external storage module 70 includes a second USB interface, and the second USB interface may be connected to the first USB interface on the circuit board. In an example, if the first USB interface is a Type-C interface, the second USB interface is also a Type-C interface.

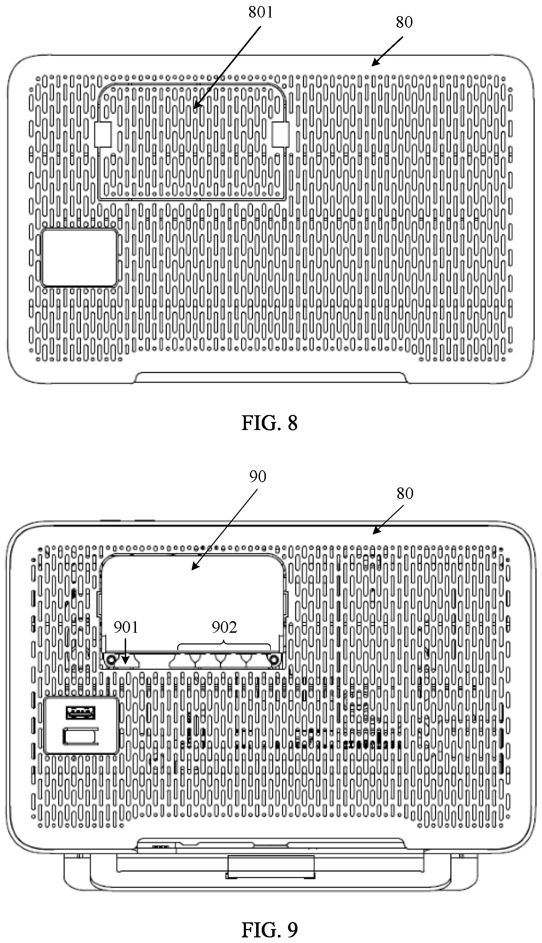

FIG. 8 is a diagram of a structure of a decorative cover of an optical gateway according to an embodiment of this application. FIG. 9 is another diagram of a structure of a decorative cover of an optical gateway according to an embodiment of this application. In some possible implementations, as shown in FIG. 8 and FIG. 9, the optical gateway further includes a decorative cover 80. The decorative cover 80 is configured to cover the rear housing 60 and is fastened to the rear housing 60, to cover a relatively disordered area on the rear housing 60, so that a rear structure of the optical gateway is flatter and more aesthetic. The decorative cover 80 further includes a heat dissipation hole, to facilitate improvement of heat dissipation performance of the optical gateway.

In some possible scenarios, as shown in FIG. 7 and FIG. 9, for example, the optical gateway is specifically a primary gateway in an FTTR scenario, a target area 602 is further reserved on the rear housing 60, and a user chooses to fasten an optical splitter 90 in the target area 602 by using the fastener 603 on the rear housing 60 according to a preference of the user. In this way, the optical splitter can be placed together with a primary gateway, and an appropriate installation position does not need to be separately selected for the optical splitter. This is conducive to saving space and making the whole more concise and aesthetic. Optionally, the target area 602 may be specifically a position, used for labeling, on the rear housing 60.

Correspondingly, a knockout hole structure 801 configured to cover the target area 602 is disposed on the decorative cover 80, and the knockout hole structure 801 and the decorative cover 80 keep a unified design style. Although the knockout hole structure 801 is fastened on the decorative cover 80, the user can manually remove the knockout hole structure 801 according to a requirement of the user, to expose the target area 602 on the rear housing 60, thereby facilitating installation of the optical splitter 90 in the target area 602. It should be understood that, if the optical splitter is installed in the target area 602, an input port 901 and an output port 902 of the optical splitter may extend out from the decorative cover 80, to facilitate wiring. Certainly, the user may also choose to install the optical splitter 90 at another position such as on a wall, so that the knockout hole structure 801 on the decorative cover 80 does not need to be removed.

It can be learned from the foregoing descriptions that in embodiments of this application, a space enclosed by the front housing and the rear housing of the optical gateway is used to accommodate the circuit board, the screen, the optical fiber interface component, and the optical transceiver module. The optical transceiver module is electrically connected to the circuit board. The optical fiber interface component is configured to connect to an optical fiber. The screen is fastened to the front housing. The screen is electrically connected to the circuit board. In addition, the front housing includes the light-transmitting area, and an image on the screen may be displayed through the light-transmitting area. In other words, in addition to implementing a conventional optical signal transmission function by using the optical transceiver module and the optical fiber interface component, the optical gateway may further display, through the screen, information that the user desires to learn of. For example, time, weather, images, upload and download speeds, and the like are displayed on the screen to implement interaction between the user and the optical gateway, thereby facilitating improvement of user experience.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An optical gateway, wherein the optical gateway comprises a front housing, a rear housing, a screen, a circuit board, an optical fiber interface component, and an optical transceiver module; and
the front housing is fastened to the rear housing, a space enclosed by the front housing and the rear housing is used to accommodate the screen, the circuit board, the optical fiber interface component, and the optical transceiver module, the optical transceiver module is electrically connected to the circuit board, the optical fiber interface component is configured to connect to an optical fiber, the screen is fastened to the front housing, the screen is electrically connected to the circuit board, the front housing comprises a light-transmitting area, and an image on the screen is displayed through the light-transmitting area.

2. The optical gateway according to claim 1, wherein the optical gateway further comprises a screen protective sheet, and the screen protective sheet is fastened to the light-transmitting area of the front housing.

3. The optical gateway according to claim 2, wherein the screen protective sheet and the front housing are integrally formed.

4. The optical gateway according to any one of claims 1 to 3, wherein the optical gateway further comprises a transparent film, and the transparent film is fastened on a front face of the front housing.

5. The optical gateway according to claim 4, wherein on the transparent film, a remaining part other than a part covering the light-transmitting area comprises a pattern.

6. The optical gateway according to any one of claims 1 to 5, wherein the screen is a touchscreen.

7. The optical gateway according to any one of claims 1 to 6, wherein a side face of the front housing is further provided with a button, and the button is electrically connected to the circuit board.

8. The optical gateway according to any one of claims 1 to 7, wherein the screen comprises a first screw hole, a rear face of the front housing comprises a second screw hole, and the first screw hole and the second screw hole are configured for fixed connection using a screw.

9. The optical gateway according to any one of claims 1 to 7, wherein the optical gateway further comprises a screen pressure plate, the screen pressure plate is placed on a rear face of the screen, the rear face of the front housing comprises a second screw hole, the screen pressure plate comprises a third screw hole, and the second screw hole and the third screw hole are configured for fixed connection using a screw.

10. The optical gateway according to any one of claims 1 to 9, wherein the rear face of the front housing comprises at least one limiting structure, and the screen is fastened to an area surrounded by the at least one limiting structure.

11. The optical gateway according to any one of claims 1 to 10, wherein the circuit board comprises a first USB interface, the rear housing comprises a cutout area, and the first USB interface is configured to connect to a data cable or an external device through the cutout area.

12. The optical gateway according to claim 11, wherein the first USB interface is a Type-C interface.

13. The optical gateway according to any one of claims 1 to 12, wherein the optical gateway further comprises an external storage module, the external storage module is fastened to the rear housing, and the external storage module comprises a second USB interface.

14. The optical gateway according to claim 13, wherein the second USB interface is a Type-C interface.

15. The optical gateway according to any one of claims 1 to 14, wherein the optical gateway further comprises a decorative cover, and the decorative cover is configured to cover the rear housing and is fastened to the rear housing.

16. The optical gateway according to claim 15, wherein the decorative cover comprises a knockout hole structure.

17. The optical gateway according to claim 16, wherein a target area on the rear housing is configured to detachably connect to an optical splitter, and the knockout hole structure is configured to cover the target area.

18. The optical gateway according to any one of claims 15 to 17, wherein the decorative cover further comprises a heat dissipation hole.

19. The optical gateway according to any one of claims 1 to 18, wherein the optical gateway is a primary gateway or a secondary gateway used in a fiber-to-the-room (FTTR) scenario, or an optical network unit (ONU) used in a fiber-to-the-home (FTTH) scenario.
